# EUROPÄISCHE PATENTSCHRIFT

(11) **EP 3 013 662 B1**
(45) Veröffentlichungstag und Bekanntmachung des Hinweises auf die Patenterteilung: **18.07.2018**
(21) Anmeldenummer: 14753235.2
(22) Anmeldetag: 14.08.2014
(51) Int. Cl.: B61L 21/08, B61L 23/04, B61L 27/00, B61B 1/02, B61L 25/02

(54) **VERFAHREN ZUR STEUERUNG VON BAHNSTEIGTÜREN UND BAHNSTEIGTÜREN-STEUERUNGSEINRICHTUNG**
METHOD FOR CONTROLLING PLATFORM DOORS AND PLATFORM-DOOR CONTROL DEVICE
PROCÉDÉ ET DISPOSITIF DE COMMANDE DE PORTES PALIÈRES DE QUAI DE GARE

(30) Priorität: 27.08.2013 DE 102013216979
(43) Veröffentlichungstag der Anmeldung: 04.05.2016
(73) Patentinhaber: Siemens Aktiengesellschaft, 80333 München (DE)
(72) Erfinder: HAMMERL, Malte, 38106 Braunschweig (DE); KOHLRUSS, Jacob Johannes, 38116 Braunschweig (DE); STEINGRÖVER, Andreas, 38120 Braunschweig (DE)
(86) Internationale Anmeldenummer: PCT/EP2014/067429
(87) Internationale Veröffentlichungsnummer: WO 2015/028318

(56) Entgegenhaltungen:
- EP-A2- 2 159 129
- WO-A1-2005/100116
- DE-A1-102008 035 615
- DE-A1-102009 044 843
- US-A1- 2012 326 916
- FESER T ET AL: "SICHERHEIT AN DER BAHNSTEIGKANTE//SAFETY AT THE EDGE OF PLATFORM", ZEVRAIL - GLASERS ANNALEN, GEORG SIEMENS VERLAG, BERLIN, DE, Bd. 129, 1. November 2005 (2005-11-01), Seiten 226-235, XP001237177, ISSN: 1618-8330

## Beschreibung

Es ist bekannt, auf Bahnhöfen der Eisenbahn und insbesondere der Untergrundbahnen Bahnsteigtüren einzusetzen, die nur dann geöffnet werden dürfen, wenn ein Zug am Bahnsteig genau in einer vorgegebenen Halteposition steht.

Ein bekanntes Verfahren zur Steuerung von Bahnsteigtüren setzt speziell ausgerüstete Züge mit einer Übertragungseinrichtung voraus, um an eine Bahnsteigtüren-Betätigungseinrichtung ein Signal mit der Nachricht zu senden, dass der Zug in der vorgegebenen Halteposition steht und eine Fahrerlaubnis für eine Ausfahrt des Zuges unterbunden ist, so dass die Bahnsteigtüren geöffnet werden dürfen. Dieses bekannte Verfahren erlaubt den Einsatz von Bahnsteigtüren nur dann, wenn alle den Bahnsteig anfahrenden Züge mit entsprechenden Übertragungseinrichtungen ausgerüstet sind. Andernfalls können Bahnsteigtüren nur manuell unter Personalverantwortung bedient werden.

Um hier Abhilfe zu schaffen, und insbesondere Bahnsteigtüren auch bei einem Zugverkehr mit manuell geführten Zügen zu ermöglichen, wird ein erfindungsgemäßes Verfahren zur Steuerung von Bahnsteigtüren welche Türstatus-Meldungen bereitstellen, angegeben,
bei dem mittels einer streckenseitigen Sensor-Einrichtung im Bereich des Bahnsteigs die Halteposition und der Stillstand eines Zuges ermittelt wird,
bei dem von einer mit der streckenseitigen Sensor-Einrichtung verbundenen Streckeneinrichtung her bei Erreichen einer zu den Bahnsteigtüren ausgerichteten Halteposition des Zuges eine Fahrerlaubnis für die Ausfahrt des Zuges unterbunden wird und Öffnungsimpulse an die Bahnsteigtüren veranlasst werden sowie nach Schließen und Verriegeln der Bahnsteigtüren die Fahrerlaubnis zur Ausfahrt freigegeben wird und als Streckeneinrichtung verwendet wird:
- eine über eine Kommunikationsverbindung mit einer Zugsicherung verbundene Bahnsteigtüren-Steuerungseinrichtung, welche die Öffnungsimpulse für die Bahnsteigtüren aussendet und die Türstatus-Meldungen von den Bahnsteigtüren empfängt, oder
- eine Zughalt-Ermittlungseinrichtung, welche über eine Kommunikationsstrecke eine Zughaltstatus-Meldung über einen Zughalt in der ausgerichteten Haltesposition an eine Zugsicherungsanordnung abgibt, die daraufhin die Öffnungsimpulse an die Bahnsteigtüren abgibt und von den Bahnsteigtüren die Türstatus-Meldungen empfängt,
wobei im Falle der Verwendung der Bahnsteigtüren-Steuerungseinrichtung als Streckeneinrichtung die Bahnsteigtüren-Steuerungseinrichtung von der Zugsicherung Fahrerlaubnisstatus-Meldungen für die Fahrerlaubnis empfängt und die Fahrerlaubnis an die Zugsicherung abgibt und im Falle der Verwendung der Zughalt-Ermittlungseinrichtung als Streckeneinrichtung die Fahrerlaubnis von der Zugsicherungsanordnung erteilt wird.

An sich ist aus der Druckschrift WO 2005/100116 A1 eine Vorrichtung zur Steuerung einer am Fahrweg eines spurgebundenen Fahrzeugs angeordneten Bahnsteigtür und der Betrieb dieser Vorrichtung bekannt. Diese bekannte Vorrichtung weist eine am Fahrweg angeordnete Sensoreinheit zur Erfassung eines vorgewählten Zustands des Fahrzeugs auf. Eine mit der Sensoreinheit verbundene Auswerteeinrichtung lässt nur dann ein Öffnen der Bahnsteigtür zu, wenn sich das Fahrzeug in dem vorgewählten Zustand befindet.

Weiterhin ist aus der Druckschrift EP 2 159 129 A2 ein Zugstoppdetektionssystem und dessen Betrieb bekannt. Dabei umfasst das Zugstoppdetektionssystem eine Zuganwesenheitsdetektionsvorrichtung, die detektiert, dass ein Zug in einem bestimmten Abschnitt anwesend ist, ein Geschwindigkeitsdetektionsmittel, das die Geschwindigkeit des Zuges detektiert, eine Stoppdetektionsvorrichtung, die das Stoppen des Zugs basierend auf einem Zuganwesenheitsausgangssignal von der Zuganwesenheitsdetektionsvorrichtung und der von dem Geschwindigkeitsdetektionsmittel detektierten Zuggeschwindigkeit detektiert, und die ein Stoppdetektionssignal erzeugt, und eine Verriegelungsvorrichtung, die eine Bodeneinrichtung basierend auf dem Stoppdetektionssignal steuert. Dabei ist das Geschwindigkeitsdetektionsmittel vor einer vorbestimmten Zugstoppposition in der Zugreiserichtung auf einem Außenrand eines Bahnsteiges angeordnet und detektiert die Geschwindigkeit des Zugs basierend auf einer Doppler-Verschiebung, die in einer Reflexionswelle von einer Seitenfläche des Zugs, der in den Bahnsteig einfährt, verursacht wird. Die Zuganwesenheits detektionsvorrichtung detektiert durch einen Gleisstromkreis, dass ein Zug in einem bestimmten Abschnitt anwesend ist.

Außerdem ist aus der Druckschrift DE 10 2009 044 843 A1 ein System zur Steuerung von Türen eines Fahrzeuges, insbesondere eines Schienenfahrzeuges, und einer Bahnsteigwand sowie ein Verfahren zur Steuerung des Systems bekannt. Dieses bekannte System umfasst Kombinationen aus einer Fahrzeugtür bzw. einer Bahnsteigwandtür mit einem ersten bzw. zweiten Stellglied zum Betätigen der Fahrzeugtür bzw. der Bahnsteigwandtür. Weiterhin umfasst dieses System eine erste bzw. zweite Steuereinheit zur Steuerung des ersten bzw. zweiten Stellglieds. Dabei ist eine Zuordnung der ersten und zweiten Kombinationen zu Paaren aus Fahrzeugtüren und Bahnsteigwandtüren vorgesehen. Hierzu umfasst das System eine erste bzw. zweite Zentralsteuereinheit. Zwischen der erster bzw. zweiter Zentralsteuereinheit und den ersten bzw. zweiten Steuereinheiten ist eine erste bzw. zweite Kommunikationsverbindung ausgebildet, um die Steuerung eines ersten bzw. zweiten Satzes der Stellglieder auszulösen. Ferner sind eine dritte Kommunikationsverbindung zwischen den ersten und zweiten Zentralsteuereinheiten und eine Zuordnung der ersten und zweiten Sätze zu Paaren der Fahrzeugtüren und Bahnsteigwandtüren vorgesehen.

Ein Vorteil des erfindungsgemäßen Verfahrens besteht darin, dass die Bahnsteigtüren ausschließlich von streckenseitigen Anordnungen gesteuert werden, so dass die Bahnsteigtüren ohne ein Signal vom Zug her geöffnet werden können. Daher kann das erfindungsgemäße Verfahren sowohl bei einem Zugverkehr mit automatisch - also mit einer Signalübertragungseinrichtung ausgerüsteten Zügen - als auch mit manuell geführten Zügen eingesetzt werden, weil nicht speziell ausgerüstete Züge verwendet werden müssen. Die Freigabe der Ausfahrt erfolgt dabei jeweils über die vorhandene Zugsicherung, zum Beispiel über Lichtsignale oder auch über eine Führerstandssignalisierung.

Dabei kann es vorteilhaft sein, wenn von der Bahnsteigtüren-Steuerungseinrichtung mit der Abgabe der Öffnungsimpulse an die Bahnsteigtüren über die Zugsicherung das Ausfahrsignal auf "Halt" gestellt wird.

Die Ablaufgeschwindigkeit des erfindungsgemäßen Verfahrens kann in vorteilhafterweise dadurch erhöht werden, dass die Öffnungsimpulse erzeugt werden, sobald das Erreichen der Halteposition und der Stillstand des Zuges absehbar sind. Dies wäre zum Beispiel der Fall, wenn die Geschwindigkeit und die Position innerhalb bestimmter Grenzen liegen und gleichzeitig eine minimale Verzögerung des Zuges vorliegt. An sich ist dies zugseitig bereits ein bekanntes Verfahren.

Bei dem erfindungsgemäßen Verfahren können unterschiedlich ausgeführte streckenseitige Sensor-Einrichtungen zum Einsatz kommen. Vorteilhaft erscheint es, wenn eine streckenseitige Sensor-Einrichtung mit mindestens einer Video-, Radar-und/oder Laseranlage verwendet wird. Dabei kann die Radar-und/oder Laseranlage vorteilhafterweise nach einem Reflexionsverfahren arbeiten.

Es kann aber auch vorteilhaft sein, als Radar-und/oder Laseranlage eine Strahlenschranke zu verwenden.

Als Video-Anlage kann auch eine Anlage verwendet werden, die mit einem Bilder-Vergleich arbeitet.

Ferner wird es als vorteilhaft angesehen, wenn eine streckenseitige Sensor-Einrichtung mit mindestens einem Lesegerät für an dem Zug angebrachte, energiepassive Informationsträger verwendet wird. Als energiepassive Informationsträger kommen vorteilhafterweise Strichcodes, Transponder, Tags und/oder RFIDs infrage. Dabei werden unter "Tags" beispielsweise Etiketten, Anhänger oder Aufkleber verstanden.

Zur weiteren Erläuterung der Erfindung ist in
- Fig.1: ein Ausführungsbeispiel einer an eine Zugsicherung angeschlossenen Bahnsteigtüren-Streckenanordnung, in
- Fig.2: ein weiteres Ausführungsbeispiel einer an eine Zugsicherung angeschlossenen Bahnsteigtüren-Streckenanordnung und in
- Fig.3: eine Draufsicht auf einen schematisch dargestellten Abschnitt eines Bahnsteigs mit einer streckenseitigen Sensor-Einrichtung und einer Streckeneinrichtung für die Bahnsteigtüren gezeigt.

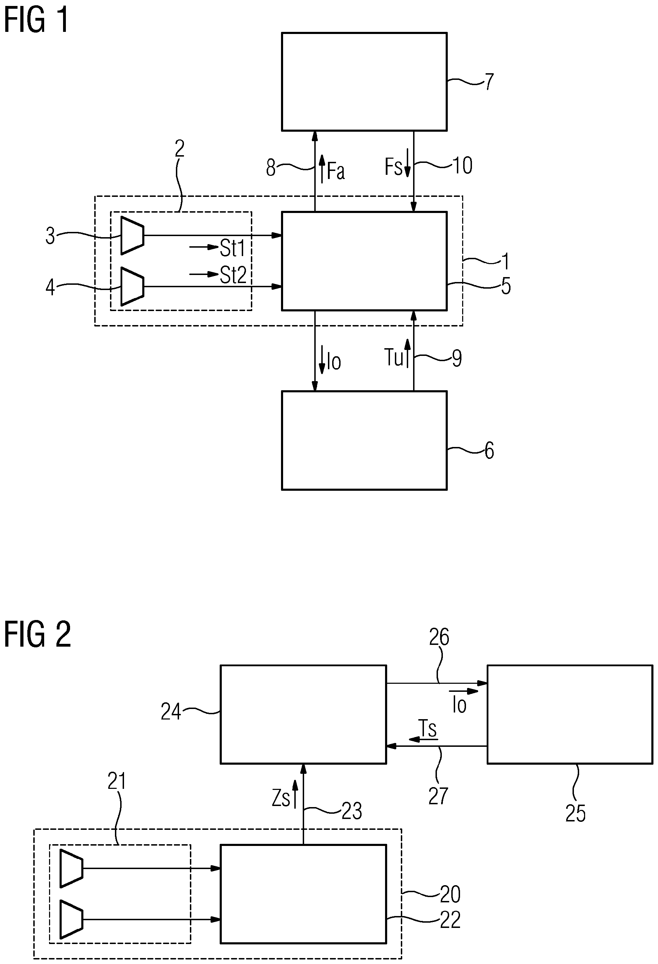

Die Fig. 1 zeigt schematisch eine Bahnsteigtüren-Streckenanordnung 1, die eine ebenfalls nur schematisch dargestellte streckenseitige Sensor-Einrichtung 2 enthält. Mit der Sensor-Einrichtung 2, die im dargestellten Ausführungsbeispiel zwei Sensoren 3 und 4 aufweist, wird festgestellt, ob der hier nicht gezeigte Zug gegenüber dem ebenfalls nicht dargestellten Bahnsteig eine vorgegebene Halteposition erreicht hat.

Mit der Sensor-Einrichtung 2 ist eine Bahnsteigtüren-Steuerungseinrichtung 5 verbunden, die von der Sensor-Einrichtung 2 mittels Steuerungssignalen "St1" und "St2" über die jeweilige Position des Zuges informiert wird. Hat der Zug seine vorgegebene Halteposition erreicht, dann werden von der Bahnsteigtüren-Steuerungseinrichtung 5 Öffnungsimpulse "Io" an nur schematisch gezeigte Bahnsteigtüren 6 gesendet, woraufhin diese öffnen. Zur gleichen Zeit wird von der Bahnsteigtüren-Steuerungseinrichtung 5 die Abgabe einer Fahrerlaubnis "Fa" für die Ausfahrt des Zuges unterbunden, indem über eine Kommunikationsverbindung 8 zu einer mit der Bahnsteigtüren-Steuerungseinrichtung 5 verbundenen, zugeordneten Zugsicherung 7 die Fahrerlaubnis "Fa" nicht gegeben wird; eine Fahrerlaubnis für die Ausfahrt des Zuges ist somit unterbunden. Die Bahnsteigtüren 6 und die Türen des Zuges sind geöffnet. Über eine Verbindungsleitung 9 zwischen der Bahnsteigtüren-Steuerungseinrichtung 5 und den Bahnsteigtüren 6 wird ständig der Status der Bahnsteigtüren 6 mittels Türstatus-Meldungen "Tu" abgefragt.

Sind die Bahnsteigtüren 6 nach Abfertigung der Fahrgäste wieder geschlossen, dann werden über die Verbindungsleitung 9 die entsprechenden Türstatus-Meldungen "Tu" zur Bahnsteigtüren-Steuerungseinrichtung 5 übertragen, von der daraufhin eine Fahrerlaubnis "Fa" für die Ausfahrt des Zuges über die Kommunikationsverbindung 8 zu der Zugsicherung 6 abgesetzt wird. Von der Zugsicherung 6 wird eine Fahrerlaubnisstatur-Meldung Fs über eine weitere Kommunikationsverbindung 10 an die Bahnsteigtüren-Steuerungseinrichtung 5 gesendet. Der Zug kann aus dem Bahnsteig ausfahren.

Bei dem Ausführungsbeispiel nach Fig. 2 weist eine Streckenanordnung 20 wiederum eine streckenseitige Sensor-Einrichtung 21 auf, die hier mit einer Zughalt-Ermittlungseinrichtung 22 als Streckeneinrichtung verbunden ist. Die Zughalt-Ermittlungseinrichtung 22 steht über eine Kommunikationsstrecke 23 mit einer Zugsicherunganordnung 24 in Verbindung, an die wiederum die Bahnsteigtüren 25 (nur schematisch dargestellt) angeschlossen sind.

Von der Zughalt-Ermittlungseinrichtung 22 wird mittels der Sensor-Einrichtung 21 ermittelt, ob der Zug in der vorgegebenen Halteposition zum Stillstand gekommen ist. Ist dies der Fall, dann wird über die Kommunikationsstrecke 23 eine Zughaltstatus-Meldung "Zs" an die Zugsicherunganordnung 24 gesendet, die daraufhin Öffnungsimpulse "Io" für die Bahnsteigtüren 25 über eine Verbindungsstrecke 26 an die Bahnsteigtüren 25 übermittelt. Die Bahnsteigtüren 25 öffnen sich.

Sind die Bahnsteigtüren 25 wieder geschlossen, dann empfängt über eine weitere Verbindungstrecke 27 die Zugsicherunganordnung 24 Türstatus-Meldungen "Ts" von den Bahnsteigtüren 25, und von der Zugsicherunganordnung 24 wird in nicht dargestellter Weise eine Fahrerlaubnis zur Ausfahrt des Zuges erteilt.

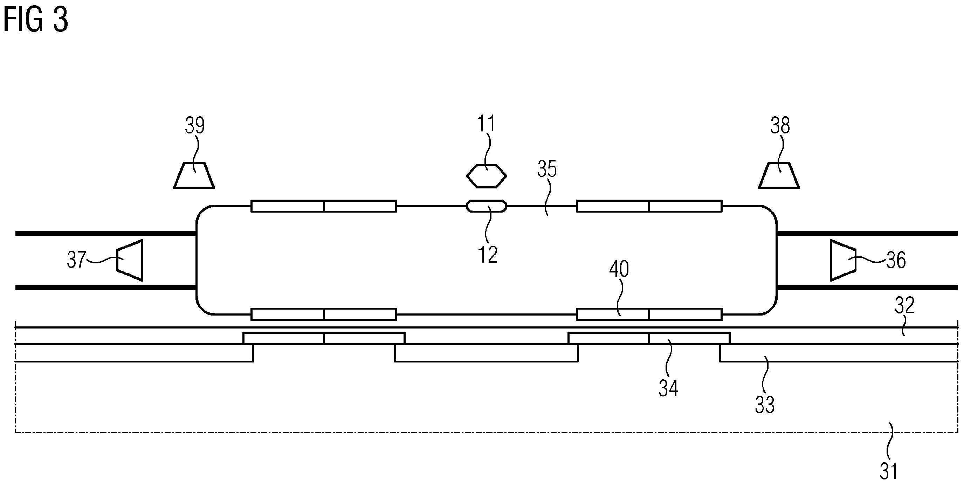

Fig.3 zeigt in einer Aufsicht einen Bahnsteig 31, der eine Bahnsteigkante 32 aufweist. Im Bereich der Bahnsteigkante 32 ist eine Absperrung vorgesehen, die aus festen Absperrelementen 33 und dazwischen angeordneten Bahnsteigtüren 34 besteht.

Fig.3 lässt ferner erkennen, dass sich vor dem Bahnsteig 31 ein Zug 35 befindet. Der Zug 35 ist im dargestellten Ausführungsbeispiel mittels einer oder mehrerer Radaranlagen 36 bis 39 als streckenseitige Sensor-Einrichtung in eine derartige Halteposition in Bezug auf den Bahnsteig 31 gebracht worden, dass Türen 40 des Zuges 35 den Bahnsteigtüren 34 gegenüberliegen. Die Radar- und/oder Laseranlagen 36 und 37 sind dabei auf die Zugfront gerichtet, während die Radar- und/oder Laseranlagen 38 und 39 seitlich angeordnet sind. Die Radar-und/oder Laseranlagen sind mit einer hier nicht gezeigten Streckeneinrichtung (vgl. Fig. 1 und 2) verbunden, die nach Ermitteln von Halteposition und Stillstand Öffnungsimpulse "Io" (siehe Fig. 1) an die Bahnsteigtüren 34 und einen Betätigungsimpuls zur Unterbindung einer Fahrerlaubnis seitens der nicht gezeigten Zugsicherung abgibt. Nach Schließen der Bahnsteigtüren 34 sendet die Streckeneinrichtung Verriegelungsimpulse an die Bahnsteigtüren 34 und erteilt die Freigabe für eine Fahrerlaubnis durch die Zugsicherung.

Die gezeigten Anordnungen der Radar- und/oder Laseranlagen in Bewegungsrichtung des Zuges oder quer zur Bewegungsrichtung sind nur als beispielhaft anzusehen, da auch schräge Anordnungen je nach Sensorart und Detektionsprinzip sinnvoll sind. Hierfür kommen sowohl reflektive als auch den Strahlengang unterbrechende Prinzipien nach Art von Strahlungsschranken in Frage.

Damit der Zug bei geöffneten Bahnsteigtüren 35 nicht wieder anfahren kann, wird im Zustand "Bahnsteigtüren sind geöffnet" die Erteilung einer entsprechenden Fahrerlaubnis verhindert. Umgekehrt wird das Öffnen der Bahnsteigtüren 35 verhindert, wenn eine entsprechende Fahrerlaubnis vorliegt. Alle diese Informationen werden nur streckenseitig unter Einbeziehung der Zugsicherung verarbeitet, was sowohl für automatisch als auch für manuell geführte Züge möglich ist.

## Patentansprüche

1. Verfahren zur Steuerung von Bahnsteigtüren (6;25;34), welche Türstatus-Meldungen (Tu) bereitstellen,
bei dem mittels einer streckenseitigen Sensor-Einrichtung (2;21;36 bis 39) im Bereich des Bahnsteigs (31) die Halteposition und der Stillstand eines Zuges (35) ermittelt werden, bei dem von einer mit der streckenseitigen Sensor-Einrichtung (2;21;36 bis 39) verbundenen Streckeneinrichtung (5;22) her bei Erreichen einer zu den Bahnsteigtüren (6;25;34) ausgerichteten Halteposition des Zuges (35) eine Fahrerlaubnis (Fa) für die Ausfahrt des Zuges unterbunden wird und Öffnungsimpulse (Io) an die Bahnsteigtüren (6;25;34) veranlasst werden sowie nach Schließen und Verriegeln der Bahnsteigtüren (6;25;34) die Fahrerlaubnis (Fa) zur Ausfahrt freigegeben wird und
bei dem als Streckeneinrichtung verwendet wird:
- eine über eine Kommunikationsverbindung (8) mit einer Zugsicherung (7) verbundene Bahnsteigtüren-Steuerungseinrichtung (5), welche die Öffnungsimpulse (Io) für die Bahnsteigtüren (6;34) aussendet und die Türstatus-Meldungen (Tu) von den Bahnsteigtüren empfängt, oder
- eine Zughalt-Ermittlungseinrichtung (22), welche über eine Kommunikationsstrecke (23) eine Zughaltstatus-Meldung (Zs) über einen Zughalt in der ausgerichteten Haltesposition an eine Zugsicherungsanordnung (24) abgibt, die daraufhin die Öffnungsimpulse (Io) an die Bahnsteigtüren (25) abgibt und die von den Bahnsteigtüren die Türstatus-Meldungen (Tu) empfängt,
wobei im Falle der Verwendung der Bahnsteigtüren-Steuerungseinrichtung (5) als Streckeneinrichtung die Bahnsteigtüren-Steuerungseinrichtung (5) von der Zugsicherung (7) Fahrerlaubnisstatus-Meldungen (Fs) für die Fahrerlaubnis (Fa) empfängt und die Fahrerlaubnis (Fa) an die Zugsicherung (7) abgibt und im Falle der Verwendung der Zughalt-Ermittlungseinrichtung (22) als Streckeneinrichtung die Fahrerlaubnis (Fa) von der Zugsicherungsanordnung (24) erteilt wird.

2. Verfahren nach Anspruch 1,
**dadurch gekennzeichnet, dass** von der Bahnsteigtüren-Steuerungseinrichtung (5) mit der Abgabe der Öffnungsimpulse (Io) an die Bahnsteigtüren (6;34) über die Zugsicherung (7) das Ausfahrsignal auf "Halt" gestellt wird.

3. Verfahren nach Anspruch 1 oder 2,
**dadurch gekennzeichnet, dass** die Öffnungsimpulse (Io) erzeugt werden, sobald das Erreichen der Halteposition und der Stillstand des Zuges (35) absehbar sind.

4. Verfahren nach einem der vorangehenden Ansprüche,
**dadurch gekennzeichnet, dass** eine streckenseitige Sensor-Einrichtung (2;21;36 bis 39) mit mindestens einer Video-, Radar- und/oder Laseranlage (36 bis 39) verwendet wird.

5. Verfahren nach Anspruch 4,
**dadurch gekennzeichnet, dass** die Radar-und/oder Laseranlage nach einem Reflexionsverfahren arbeitet.

6. Verfahren nach Anspruch 4,
**dadurch gekennzeichnet, dass** als Radar-und/oder Laseranlage eine Strahlenschranke verwendet wird.

7. Verfahren nach Anspruch 4,
**dadurch gekennzeichnet, dass** die Video-Anlage mit einem Bilder-Vergleich arbeitet.

8. Verfahren nach einem der vorangehenden Ansprüche,
**dadurch gekennzeichnet, dass** eine streckenseitige Sensor-Einrichtung (2;21;36 bis 39) mit mindestens einem Lesegerät für an dem Zug (35) angebrachte, energiepassive Informationsträger verwendet wird.

9. Verfahren nach Anspruch 8,
**dadurch gekennzeichnet, dass** als energiepassive Informationsträger Strichcodes, Transponder, Tags und/oder RFIDs verwendet werden.

## Claims

1. Method for controlling platform doors (6;25;34) which provide door status messages (Tu),
in which the stopping position and the standstill of a train (35) are determined in the region of the platform (31) by means of a trackside sensor device (2;21;36 to 39),
in which a movement authority (Fa) for the departure of the train is prevented by a trackside device (5;22) connected to the trackside sensor device (2;21;36 to 39) on arrival at a stopping position of the train (35) which is aligned with the platform doors (6;25;34), and opening pulses (Io) to the platform doors (6;25;34) are induced, and after closing and locking the platform doors (6;25;34) the movement authority (Fa) for the departure is released and
in which the following are used as a trackside device:
- a platform door control device (5) which is connected to an automatic train protection system (7) via a communication link (8) and which emits the opening pulses (Io) for the platform doors (6; 34) and receives the door status messages (Tu) from the platform doors, or
- a train stop determination device (22) which via a communication path (23) emits a train stop status message (Zs) about a train stop in the aligned stopping position to an automatic train protection arrangement (24) which thereupon emits the opening pulses (Io) to the platform doors (25) and which receives the door status messages (Tu) from the platform doors,
wherein in the case of the platform door control device (5) being used as a trackside device the platform door control device (5) receives movement authority status messages (Fs) for the movement authority (Fa) from the automatic train protection system (7) and emits the movement authority (Fa) to the automatic train protection system (7) and in the case of the train stop determination device (22) being used as a trackside device the movement authority (Fa) is issued by the automatic train control arrangement (24).

2. Method according to claim 1,
**characterised in that**
the departure signal is set to "Stop" by the platform door control device (5) with the emission of the opening pulses (Io) to the platform doors (6;34) via the automatic train protection system (7).

3. Method according to claim 1 or 2,
**characterised in that**
the opening pulses (Io) are generated as soon as it can be foreseen that the stopping position and the standstill of the train (35) will be reached.

4. Method according to one of the preceding claims,
**characterised in that**
a trackside sensor device (2;21;36 to 39) with at least one video, radar and/or laser system (36 to 39) is used.

5. Method according to claim 4,
**characterised in that**
the radar and/or laser system operates according to a reflection method.

6. Method according to claim 4,
**characterised in that**
a radiation barrier is used as a radar and/or laser system.

7. Method according to claim 4,
**characterised in that**
the video system operates with an image comparison.

8. Method according to one of the preceding claims,
**characterised in that**
a trackside sensor device (2;21;36 to 39) fitted with at least one reader is used for energy-passive information carriers attached to the train (35).

9. Method according to claim 8,
**characterised in that**
barcodes, transponders, tags and/or RFIDs are used as energy-passive information carriers.

## Revendications

1. Procédé de commande de portes (6; 25; 34) de quai, qui mettent à disposition des messages (Tu) d'état de porte,
dans lequel, au moyen d'un dispositif (2; 21; 36 à 39) à capteur du côté de la voie, on détermine, dans la région du quai (31), la position d'arrêt et qu'un train (35) est à l'arrêt, dans lequel
à partir d'un dispositif (5; 22) de voie, relié au dispositif (2; 21; 36 à 39) à capteur du côté de la voie, on supprime, lorsqu'une position d'arrêt, orientée par rapport aux portes (6; 25; 34) du quai, du train (35) est atteinte, une autorisation (Fa) de rouler de départ du train et on provoque des impulsions (Io) d'ouverture sur les portes (6; 25; 34) du quai, ainsi qu'après fermeture et verrouillage des portes (6; 25; 34) du quai, on libère l'autorisation (Fa) de rouler pour le départ et
dans lequel on utilise comme dispositif de voie
- un dispositif (5) de commande de portes de quai, qui est relié à un dispositif (7) d'arrêt automatique des trains par une liaison (8) de communication, qui émet les impulsions (Io) d'ouverture des portes (6; 34) de quai et qui reçoit, des portes du quai, les messages (Tu) d'état de porte, ou
- un dispositif (22) de détermination de l'arrêt du train, qui émet, vers un système (24) d'arrêt automatique des trains, par l'intermédiaire d'une section (23) de communication, un message (Zs) d'état d'arrêt du train sur un arrêt du train dans la position d'arrêt orientée, qui émet ensuite des impulsions (Io) d'ouverture vers les portes (25) du quai et qui reçoit, des portes du quai, les messages (Tu) d'état de porte,
dans lequel, dans le cas de l'utilisation du dispositif (5) de commande des portes du quai comme dispositif de voie, le dispositif (5) de commande de portes du quai reçoit, du dispositif (7) d'arrêt automatique des trains, des messages (Fs) d'état d'autorisation de rouler, pour l'autorisation (Fa) de rouler, et émet vers l'arrêt (7) automatique des trains l'autorisation (Fa) de rouler, et dans le cas de l'utilisation du dispositif (22) de détermination de l'arrêt du train comme dispositif de voie, reçoit l'autorisation (Fa) de rouler du système (24) d'arrêt automatique des trains.

2. Procédé suivant la revendication 1,
**caractérisé en ce que**
le signal de départ est mis sur « arrêt » par le dispositif (5) de commande des portes du quai par l'émission des impulsions (Io) d'ouverture vers les portes (6; 34) du quai par l'intermédiaire de l'arrêt (7) automatique des trains.

3. Procédé suivant la revendication 1 ou 2,
**caractérisé en ce que**
l'on produit les impulsions (Io) d'ouverture dès qu'il peut être prévu que la position d'arrêt est atteinte et que le train (35) sera à l'arrêt.

4. Procédé suivant l'une des revendications précédentes,
**caractérisé en ce que**
l'on utilise un dispositif (2; 21; 36 à 39) à capteur du côté de la voie, ayant au moins un système (36 à 39) vidéo, radar et/ou laser.

5. Procédé suivant la revendication 4,
**caractérisé en ce que**
le système radar et/ou laser opère suivant un procédé de réflexion.

6. Procédé suivant la revendication 4,
**caractérisé en ce que**
l'on utilise une cellule photoélectrique comme système radar et/ou laser.

7. Procédé suivant la revendication 4,
**caractérisé en ce que**
le système vidéo opère par une comparaison d'images.

8. Procédé suivant l'une des revendications précédentes,
**caractérisé en ce que**
l'on utilise un dispositif (2; 21; 36 à 39) à capteur du côté de la voie, ayant au moins un appareil de lecture de supports d'information passifs énergétiquement, mis sur le train (35).

9. Procédé suivant la revendication 8,
**caractérisé en ce que**
l'on utilise comme supports d'information passifs énergétiquement, des codes barres, des transpondeurs, des étiquettes et/ou des RFID.
